# EUROPEAN PATENT SPECIFICATION

(11) **EP 3 067 528 B1**
(45) Date of publication and mention of the grant of the patent: **25.04.2018**
(21) Application number: 15159023.9
(22) Date of filing: 13.03.2015
(51) Int. Cl.: F01N 3/20, F04C 15/00

(54) **PUMP FOR A FLUID**
PUMPE FÜR EINE FLÜSSIGKEIT
POMPE POUR UN FLUIDE

(43) Date of publication of application: 14.09.2016
(73) Proprietor: Inergy Automotive Systems Research (Société Anonyme), 1120 Bruxelles (BE)
(72) Inventor: Leonard, Stéphane, 1090 Bruxelles (BE)
(74) Representative: Remy, Vincent Noel Paul

(56) References cited:
- EP-A2- 0 987 439
- EP-B1- 1 633 980
- WO-A2-2010/108959
- DE-A1-102009 028 164
- DE-A1-102013 011 365
- DE-B3-102012 008 527
- FR-A1- 2 638 812

## Description

The present invention pertains to the field of fluid dispensing systems, and in particular to pumps for dispensing vehicular fluids such as fuel and urea solutions.

Urea solutions are used in selective catalytic reduction (SCR) systems. In known SCR systems, a pump is used to pump a urea solution from a storage tank and to feed the urea solution to an injector via a supply line. The injector is configured to inject the urea solution into the exhaust gas of an internal combustion engine. Different types of pump can be used. For example, a rotating pump (e.g. gear pump, peristaltic pump) or a linear pump (e.g. piston pump, membrane pump) can be used. The pump is located inside or outside the tank and a pressure regulation is foreseen to regulate the pressure of the urea solution provided to the injector.

It is a disadvantage of the known pumps that the pressure at the output of the pump is not constant. This problem results from the pressure pulses generated at the output of the pump. For example, in the case of a piston pump, the static and/or dynamic friction of the piston inside the pump housing may cause the generation of pressure pulses. For example, in the case of a gear pump, the manufacturing imperfection of the gear system or discontinuity of the fluid delivery (between each tooth of the gears) may cause the generation of pressure pulses. It is also known, from DE 10 2012 008 527 B3, FR 2 638 812 and EP 1 633 980 B1, to use pumps connected to external damping means.

In view of the above, there is a need for an improved pump with a compact design and that allows getting a constant output pressure.

It is an object of embodiments of the present invention to overcome the above-mentioned disadvantage.

According to an aspect of the invention, there is provided a pump for a fluid, comprising a body having an inlet port through which the fluid enters the body and an outlet port through which the fluid exits the body. The pump is such that it comprises at least one blind recess arranged inside of the body and being designed to form at least one gas pocket communicating with said outlet port to damp pressure pulses in the fluid exiting the body.

Thus, it is proposed a pump with an integrated fluidic damper. In other words, the damping of the pressure pulses takes place inside the pump itself. The damping function is performed before the fluid exits the pump. Advantageously, the integrated fluidic damper according to the invention is formed by one or several blind recesses (or cavities) arranged inside of the body of the pump. So there is no additional device to be added to the pump. Thus, the pump is compact. Each blind recess is configured to act as a gas pocket, preferably an air pocket. The air pocket(s) give(s) the pump some compliance to absorb and damp pressure pulses or hydraulic shocks in the exiting fluid. The pressure regulation is thus improved.

Advantageously, at least one blind recess is integrally formed in at least one part of the body and said blind recess is in fluid communication with the outlet port. In a preferred embodiment, the body is injection moulded from a plastic material or a thermoset material. Thus, the manufacturing is easy. The plastic may be HDPE; alternatively, it may be a polyacetal and, in particular, POM (polyoxymethylene); a polyphtalamide; a polyamide (for example nylon-6,6); a phenolic resin or a polyvinyl alcohol. According to the invention, the pump is a gear pump. The gear pump comprises a gear system and a rotor system arranged inside of the body of the pump. The body of the pump comprises an inner chamber inside which is disposed the gear system. The inner chamber is in fluid communication with the inlet port of the pump and the outlet port of the pump via, respectively, an inlet path and an outlet path. According to the invention, at least one blind recess is integrally formed in the rotor system and said blind recess is in fluid communication with the outlet path. In a preferred embodiment, the rotor system is injection moulded from a blend of plastic and magnetically receptive material. Thus, the manufacturing is easy. Still according to the invention, the fluid is a urea solution or fuel. The invention also concerns a urea tank comprising the pump as described above.

The invention also concerns a fuel tank comprising the pump as described above.

The invention further concerns a motor vehicle comprising the pump as described above.

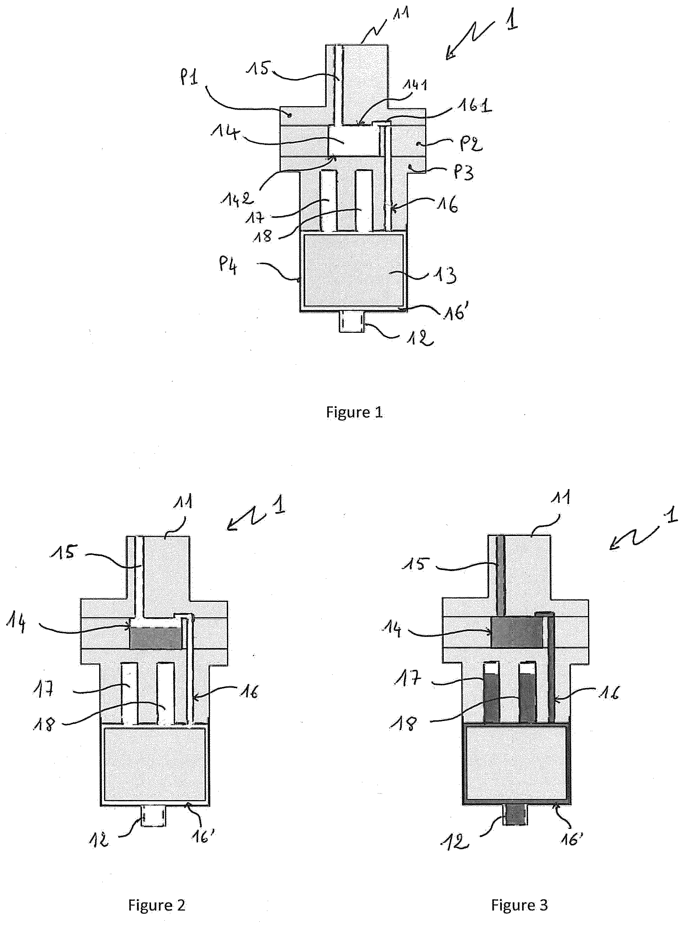

The present invention is illustrated in a non limitative way by the examples below relying on figures 1 to 7 attached. In these figures, identical or similar devices bear identical reference numbers.

Figure 1 is a schematic view of a pump according to a first particular embodiment of the present invention. In this particular embodiment, the pump 1 is a gear pump for a SCR system which is provided in a motor vehicle (i.e. passenger car, truck, etc.). The pump 1 is configured to rotate in a first rotation direction for pumping a urea solution from a urea tank and feeding the urea solution to an injector via a supply line. The pump 1 is also configured to rotate in a second rotation direction (opposite to the first rotation direction) for purging the supply line.

The pump 1 comprises a body having an inlet port 11 through which the urea solution enters the body and an outlet port 12 through which the urea solution exits the body.

The pump 1 comprises:
- a rotor 13 cooperating with a stator (not illustrated); and
- an inner chamber 14 inside which is disposed a gear system (not illustrated).

The chamber 14 is in fluid communication with the inlet port 11 and the outlet port 12 via respectively an inlet channel 15 (defining an inlet path) and an outlet channel 16 (forming a part of an outlet path 16').

In this first particular embodiment, the inlet and outlet channels are connected to the upper wall 141 of the chamber. Thus, the upper wall 141 of the chamber comprises a first orifice through which the inlet channel can communicate with the interior of the chamber and a second orifice through which the outlet channel can communicate with the interior of the chamber. The urea solution can enter and exit the chamber only via the first and second orifices.

The outlet channel 16 comprises a siphon section 161. Such arrangement allows after a purging operation (i.e. when the pump is stopped) to trap inside the chamber residues of the urea solution drained by gravity from the inlet channel 15. This situation is illustrated in Figure 2. The arrangement of the outlet channel 16 is such that it prevents the residues to completely flow out of the chamber by gravity. By this way, the gear system can be immersed in urea solution before the next start-up of the pump. This allows an easy start of the pump and an efficient pumping of the fluid. These residues will be drain off the chamber by means of the gear system at the next start-up of the pump.

As illustrated in the example of Figure 1, the pump body comprises four parts which are assembled to form one block; a front body P1, a middle body P2, a rear body P3 and a rotor body P4. In this particular embodiment, the rear body P3 comprises two blind recesses (i.e. cavities) (17, 18). For example, each blind recess has a cylindrical cross section. Other shapes can of course be implemented as long as a damping effect is obtained. The blind recesses (17, 18) are designed to trap a pocket of air during pumping operation. Each blind recess has an open end communicating with the outlet path 16' and an opposite closed end. Therefore, during pumping operation the liquid move forward in the blind recesses (17, 18) as the liquid is not compressible, compressing the air volume contained therein. This situation is illustrated in Figure 3. Compressing the air in the blind recesses damps and dissipates the pressure pulses in the fluid exiting the pump. The total volume of the air cavity is defined/dimensioned in order to ensure sufficient damping and mechanical resistance. For example, the total volume of the air cavity is relatively small; less than 2ml, and typically between 0.15ml and 1.2ml.

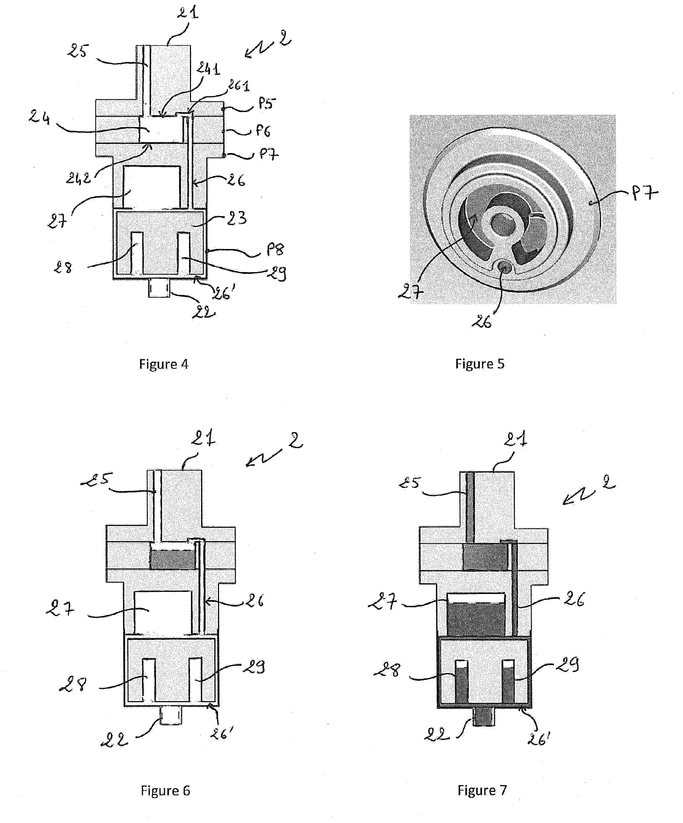

Figure 4 is a schematic view of a pump according to a second particular embodiment of the present invention. In this particular embodiment, the pump 2 is a gear pump for a SCR system which is provided in a motor vehicle (i.e. passenger car, truck, etc.). The pump 2 is configured to rotate in a first rotation direction for pumping a urea solution from a urea tank and feeding the urea solution to an injector via a supply line. The pump 2 is also configured to rotate in a second rotation direction (opposite to the first rotation direction) for purging the supply line.

The pump 2 comprises a body having an inlet port 21 through which the urea solution enters the body and an outlet port 22 through which the urea solution exits the body.

The pump 2 comprises:
- a rotor 23 cooperating with a stator (not illustrated); and
- an inner chamber 24 inside which is disposed a gear system (not illustrated).

The chamber 24 is in fluid communication with the inlet port 21 and the outlet port 22 via respectively an inlet channel 25 (defining an inlet path) and an outlet channel 26 (forming a part of an outlet path 26').

In this second particular embodiment, the inlet and outlet channels are connected to the upper wall 241 of the chamber. Thus, the upper wall 241 of the chamber comprises a first orifice through which the inlet channel can communicate with the interior of the chamber and a second orifice through which the outlet channel can communicate with the interior of the chamber. The urea solution can enter and exit the chamber only via the first and second orifices.

The outlet channel 26 comprises a siphon section 261. Such arrangement allows after a purging operation (i.e. when the pump is stopped) to trap inside the chamber residues of the urea solution drained by gravity from the inlet channel 25. This situation is illustrated in Figure 6. The arrangement of the outlet channel 26 is such that it prevents the residues to completely flow out of the chamber by gravity. By this way, the gear system can be immersed in urea solution before the next start-up of the pump. This allows an easy start of the pump and an efficient pumping of the fluid. These residues will be drain off the chamber by means of the gear system at the next start-up of the pump.

As illustrated in the example of Figure 4, the pump body comprises four parts which are assembled to form one block; a front body P5, a middle body P6, a rear body P7 and a rotor body P8. As illustrated in the example of Figure 5, the rear body P7 comprises one blind recess 27 having a C-shaped cross section. The C-shaped cross section has the advantage of high air volume capacity and mechanical resistance. The blind recess 27 is designed to trap a pocket of air during pumping operation. The blind recess 27 has an open end communicating with the outlet path 26' and an opposite closed end.

In this second particular embodiment, the rotor 23 comprises two blind recesses (28, 29). The blind recesses (28, 29) are designed to trap a pocket of air during pumping operation. Each blind recess (28, 29) has an open end communicating with the outlet path 26' and an opposite closed end.

During pumping operation the liquid move forward in the blind recesses (27, 28, 29) as the liquid is not compressible, compressing the air volume contained therein. This situation is illustrated in Figure 7. Compressing the air in the blind recesses damps and dissipates the pressure pulses in the fluid exiting the pump. In another embodiment which is not illustrated, the blind recess in the rotor can be an annular cavity.

In yet another embodiment, the body of the pump can be made of metal. For example, the body and its integrated blind recess(es) can be formed by using a process for sintering metal powder, ceramic powder or a mixture thereof.

## Claims

1. Pump (1) for a fluid, comprising a body having an inlet port (11; 21) through which the fluid enters the body and an outlet port (12; 22) through which the fluid exits the body, **characterized in that** the pump (1) comprises at least one blind recess (17, 18; 27, 28, 29) arranged inside of the body and having an open end communicating with said outlet port (12; 22) and an opposite closed end, the at least one blind recess (17, 18; 27, 28, 29) being designed to trap at least one gas pocket for damping pressure pulses in the fluid exiting the body,
wherein the pump (1) is a gear pump (1) comprising a gear system and a rotor system arranged inside the body, the body comprising an inner chamber (14; 24) inside which is disposed the gear system, the inner chamber (14; 24) being in fluid communication with the inlet port (11; 21) and the outlet port (12; 22) via respectively an inlet path (15; 25) and an outlet path (16'; 26'),
wherein at least one blind recess (17, 18; 27, 28, 29) is integrally formed in the rotor system and is in fluid communication with the outlet path (16'; 26'),
wherein said fluid is a urea solution or fuel.

2. Pump (1) according to claim 1, wherein at least one blind recess (17, 18; 27, 28, 29) is integrally formed in at least one part of the body and is in fluid communication with the outlet port (16'; 26').

3. Pump (1) according to claim 2, wherein said at least one part of the body is injection moulded from a thermoplastic or thermoset material.

4. Pump (1) according to the preceding claims, wherein said at least one blind recess (17, 18; 27, 28, 29) has a C-shaped cross section or a cylindrical cross section.

5. A urea tank comprising a pump (1) according to any of the preceding claims.

6. A fuel tank comprising a pump (1) according to any of the preceding claims.

7. A motor vehicle comprising a pump (1) according to any of the preceding claims.

## Patentansprüche

1. Pumpe (1) für ein Fluid, einen Körper aufweisend, welcher eine Einlassöffnung (11; 21) aufweist, durch welche das Fluid in den Körper eintritt, und eine Auslassöffnung (12; 22) aufweist, durch welche das Fluid aus dem Körper austritt, **dadurch gekennzeichnet, dass** die Pumpe (1) wenigstens eine Blindausnehmung (17, 18; 27, 28, 29) aufweist, welche innerhalb des Körpers angeordnet ist und ein offenes Ende aufweist, welches in Verbindung mit der Auslassöffnung (12; 22) steht, und ein gegenüberliegendes geschlossenes Ende aufweist, die wenigstens eine Blindausnehmung (17, 18; 27, 28, 29) ist derart gestaltet, wenigstens eine Gastasche zum Dämpfen von Druckimpulsen der aus dem Körper austretenden Flüssigkeit zu formen,
wobei die Pumpe (1) eine Zahnradpumpe (1) ist, welche ein Getriebesystem und ein Rotorsystem aufweist, und welche innerhalb des Körpers angeordnet sind, wobei der Körper eine innere Kammer (14; 24) aufweist, in welcher das Getriebesystem angeordnet ist, wobei die innere Kammer (14; 24) über einen Einlassweg (15; 25) und einen Auslassweg (16'; 26') in Fluidkommunikation mit der Einlassöffnung (11; 21) beziehungsweise der Auslassöffnung (12; 22) steht,
wobei wenigstens eine Blindausnehmung (17, 18; 27, 28, 29) in dem Rotorsystem einstückig ausgebildet ist, und in Fluidkommunikation mit dem Auslassweg (16'; 26') steht,
wobei das Fluid eine Harnstofflösung oder ein Kraftstoff ist.

2. Pumpe (1) gemäß Anspruch 1, wobei wenigstens eine Blindausnehmung (17, 18; 27, 28, 29) in wenigstens einem Teil des Körpers einstückig ausgebildet ist, und in Fluidkommunikation mit der Auslassöffnung (16'; 26') steht.

3. Pumpe (1) gemäß Anspruch 2, wobei der wenigstens eine Teil des Körpers aus einem thermoplastischen oder duroplastischen Material spritzgegossen ist.

4. Pumpe (1) gemäß einem der vorhergehenden Ansprüche, wobei die wenigstens eine Blindausnehmung (17, 18; 27, 28, 29) einen C-förmigen Querschnitt oder einen zylindrischen Querschnitt aufweist.

5. Harnstofftank, aufweisend eine Pumpe (1) gemäß einem der vorhergehenden Ansprüche.

6. Kraftstofftank, aufweisend eine Pumpe (1) gemäß einem der vorhergehenden Ansprüche.

7. Kraftfahrzeug, aufweisend eine Pumpe (1) gemäß einem der vorhergehenden Ansprüche.

## Revendications

1. Pompe (1) pour un fluide, comprenant un corps ayant un orifice d'entrée (11 ; 21) à travers lequel le fluide pénètre dans le corps et un orifice de sortie (12 ; 22) à travers lequel le fluide sort du corps, **caractérisé en ce que** la pompe (1) comprend au moins un évidement borgne (17, 18 ; 27, 28, 29) aménagé à l'intérieur du corps et ayant une extrémité ouverte communiquant avec ledit orifice de sortie (12 ; 22) et une extrémité fermée opposée, ledit au moins un évidement borgne (17, 18 ; 27, 28, 29) étant conçu pour piéger au moins une poche de gaz pour amortir les impulsions de pression dans le fluide sortant du corps,
la pompe (1) étant une pompe à engrenage (1) comprenant un système d'engrenages et un système de rotor agencé à l'intérieur du corps, le corps comprenant une chambre intérieure (14 ; 24) à l'intérieur de laquelle est disposé le système d'engrenages, la chambre intérieure (14 ; 24) étant en communication fluidique avec l'orifice d'entrée (11 ; 21) et l'orifice de sortie (12 ; 22) via respectivement un chemin d'entrée (15 ; 25) et d'un chemin de sortie (16' ; 26'),
au moins un évidement borgne (17, 18 ; 27, 28, 29) étant formé d'un seul tenant dans le système de rotor et étant en communication fluidique avec le chemin de sortie (16' ; 26'),
ledit fluide étant une solution d'urée ou du carburant.

2. Pompe (1) selon la revendication 1, dans laquelle au moins un évidement borgne (17, 18 ; 27, 28, 29) est formé d'un seul tenant dans au moins une partie du corps et est en communication fluidique avec l'orifice de sortie (12 ; 22).

3. Pompe (1) selon la revendication 2, dans laquelle ladite au moins une partie du corps est moulée par injection à partir d'un matériau thermoplastique ou thermo-durci.

4. Pompe (1) selon les revendications précédentes, dans laquelle ledit au moins un évidement borgne (17, 18 ; 27, 28, 29) a une section transversale en forme de C ou une section transversale cylindrique.

5. Un réservoir à urée comprenant une pompe (1) selon l'une quelconque des revendications précédentes.

6. Un réservoir de carburant comprenant une pompe (1) selon l'une quelconque des revendications précédentes.

7. Un véhicule automobile comprenant une pompe (1) selon l'une quelconque des revendications précédentes.
